(19) Europäisches Patentamt
European Patent Office
Office européen des brevets

(11) **EP 4 679 532 A1**

(12) **EUROPEAN PATENT APPLICATION**
published in accordance with Art. 153(4) EPC

(43) Date of publication:
**14.01.2026 Bulletin 2026/03**

(21) Application number: **24780312.5**

(22) Date of filing: **26.03.2024**

(51) International Patent Classification (IPC):
*H01M 4/58* [(2010.01)]   *H01M 4/13* [(2010.01)]
*H01M 4/139* [(2010.01)]   *H01M 4/36* [(2006.01)]
*H01M 4/485* [(2010.01)]   *H01M 4/505* [(2010.01)]
*H01M 4/525* [(2010.01)]   *H01M 4/62* [(2006.01)]

(52) Cooperative Patent Classification (CPC):
**H01M 4/13; H01M 4/139; H01M 4/36; H01M 4/485;
H01M 4/505; H01M 4/525; H01M 4/58; H01M 4/62;
Y02E 60/10**

(86) International application number:
**PCT/JP2024/011955**

(87) International publication number:
**WO 2024/204202 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023   JP 2023054812
30.01.2024   JP 2024011964
22.03.2024   JP 2024046440**

(71) Applicants:
• **SHINSHU UNIVERSITY
Matsumoto City, Nagano, 390-8621 (JP)**
• **Toray Engineering Co., Ltd.
Tokyo 103-0028 (JP)**

(72) Inventors:
• **TESHIMA, Katsuya
Nagano City, Nagano 380-8553 (JP)**
• **SHISHINO, Kazuyuki
Otsu-shi, Shiga 520-0842 (JP)**

(74) Representative: **BRP Renaud & Partner mbB
Rechtsanwälte Patentanwälte
Steuerberater
Königstraße 28
70173 Stuttgart (DE)**

(54) **ELECTRODE MATERIAL, ELECTRODE SLURRY, PRODUCTION METHOD FOR ELECTRODE MATERIAL, ELECTRODE, AND PRODUCTION METHOD FOR ELECTRODE**

(57) An electrode material 1 for a secondary battery, which is capable of suppressing a decrease in an electrode capacity and having excellent cycle characteristics, includes an electrode active material 10, and the entire surface or part of the surface of the electrode active material 10 is covered in a shell shape with a nonaqueous binder 20.

FIG. 2

## Description

### TECHNICAL FIELD

The present invention relates to an electrode material for a secondary battery, an electrode slurry, a method for manufacturing an electrode material, an electrode, and a method for manufacturing an electrode.

### BACKGROUND ART

An electrode forming a secondary battery such as a lithium-ion secondary battery is generally produced in such a manner that a slurry in which an electrode active material, a binder, and a conductive auxiliary agent are dispersed is applied to a current collector and is dried.

Conventionally, as the binder for the electrode, polyvinylidene fluoride (PVDF) having excellent characteristics in terms of mechanical strength, adhesiveness, oxidation resistance, and the like has been broadly used.

However, PVDF is not dissolved in water, and for this reason, it is necessary to produce a slurry in which PVDF is dissolved in an organic solvent such as N-methylpyrrolidone (NMP), which leads to a problem that an environmental load increases due to use of the organic solvent. For this reason, in recent years, there has been demanded development of an aqueous binder which can be dispersed in an aqueous solvent with a less environmental load.

As an aqueous binder used for a negative electrode, carboxymethylcellulose (CMC) and styrene-butadiene rubber (SBR) have been developed. However, in a case where such an aqueous binder is directly used for a positive electrode, there is a problem that the aqueous binder is oxidized and deteriorated under positive electrode environment.

Patent Document 1 discloses a binder formed of an acrylic-based polymer as an aqueous binder used for a positive electrode. This aqueous binder is not dissolved in water, and a positive electrode slurry is produced by dispersing the aqueous binder as a suspended particle in an aqueous solvent. When this positive electrode slurry is applied to a current collector and is dried to produce a positive electrode, the aqueous binder is unevenly distributed in a recess between positive electrode active materials while holding its particle shape.

### CITATION LIST

### PATENT DOCUMENT

PATENT DOCUMENT 1: Japanese Unexamined Patent Publication No. 2017-91789

### SUMMARY OF THE INVENTION

### TECHNICAL PROBLEM

The aqueous binder disclosed in Patent Document 1 is effective in terms of the oxidation resistance, but the positive electrode active material includes lithium. For this reason, when the positive electrode slurry is produced by dispersing this aqueous binder in the aqueous solvent together with the positive electrode active material and a conductive auxiliary agent, transition metal such as lithium in the positive electrode active material is dissolved into the aqueous solvent, which leads to a problem that a positive electrode capacity decreases. Note that such a problem may also be caused in the case of a negative electrode using a material including lithium as a negative electrode active material.

The above-described aqueous binder is only unevenly distributed in the recess between the positive electrode active materials, and for this reason, it is difficult to uniformly disperse the aqueous binder in the positive electrode. For this reason, there are problems that binding between the positive electrode active materials and between the positive electrode active material and the current collector is weakened and cycle characteristics of a secondary battery are degraded. Note that these problems may also be caused in the case of a negative electrode using the above-described aqueous binder.

The present invention has been made in view of these points, and is intended to provide an electrode material for a secondary battery, an electrode slurry, a method for manufacturing an electrode material, an electrode, and a method for manufacturing an electrode, which are capable of suppressing a decrease in an electrode capacity and achieving excellent cycle characteristics.

### SOLUTION TO THE PROBLEM

The electrode material according to the present invention is an electrode material for a secondary battery, which includes an active material, and the entire surface of the active material is covered in a shell shape with a nonaqueous binder.

In a certain preferred embodiment, part of the surface of the electrode active material is covered with a metal oxide, and the nonaqueous binder covers the entire surface of the electrode active material in the shell shape so as to cover the metal oxide.

The electrode slurry according to the present invention is an electrode slurry including an electrode mixture, the electrode mixture includes an active material configured such that the entire surface thereof is covered in a shell shape with a nonaqueous binder and a conductive auxiliary agent, and the electrode mixture is dispersed in an aqueous solvent.

The method for manufacturing the electrode material according to the present invention is a method for manufacturing an electrode material for a secondary battery, which includes a step of dissolving powder of a nonaqueous binder in a nonaqueous solvent and dispersing powder of an electrode active material in the nonaqueous solvent, and a step of evaporating the nonaqueous solvent and covering the entire surface of the electrode active material in a shell shape with the nonaqueous binder.

The electrode according to the present invention is an electrode for a secondary battery, which includes an electrode mixture formed on a current collector, the electrode mixture includes an electrode material configured such that the entire surface of an electrode active material is covered in a shell shape with a nonaqueous binder and a conductive auxiliary agent, the electrode active material in the electrode material is dispersed in a state of the entire surface thereof being covered in the shell shape with the nonaqueous binder, and when the total volume of the nonaqueous binder covering the entire surface of the electrode active material is $V_1$ and the total volume of the nonaqueous binder present in a region surrounded by the electrode active material covered with the nonaqueous binder is $V_2$, $V_1 > V_2$ is satisfied.

The electrode according to the present invention is an electrode for a secondary battery, which includes an electrode mixture formed on a current collector, the electrode mixture includes an electrode material configured such that the entire surface of an electrode active material is covered in a shell shape with a nonaqueous binder and a conductive auxiliary agent, the electrode active material in the electrode material is dispersed in a state of the entire surface thereof being covered in the shell shape with the nonaqueous binder, and when the total volume of a region surrounded by the electrode active material covered with the nonaqueous binder is $V_3$ and the total volume of the nonaqueous binder present in the region surrounded by the electrode active material covered with the nonaqueous binder is $V_2$, $V_3 > V_2$ is satisfied.

The method for manufacturing the electrode for the secondary battery according to the present invention includes a step of forming an electrode material such that the entire surface of an electrode active material is covered in a shell shape with a nonaqueous binder, a step of forming an electrode slurry by dispersing, in an aqueous solvent, an electrode mixture including the electrode material and a conductive auxiliary agent, and a step of applying the electrode slurry onto a current collector and thereafter drying a coating film.

ADVANTAGES OF THE INVENTION

According to the present invention, the electrode material for the secondary battery, the electrode slurry, the method for manufacturing the electrode material, the electrode, and the method for manufacturing the electrode, which are capable of suppressing a decrease in the electrode capacity and achieving excellent cycle characteristics, can be provided.

BRIEF DESCRIPTION OF THE DRAWINGS

[FIG. 1] FIG. 1 is a view schematically showing the structure of a positive electrode material in an embodiment of the present invention.
[FIG. 2] FIG. 2 is a view schematically showing the structure of a positive electrode plate produced using a positive electrode slurry including the positive electrode material in the present embodiment.
[FIG. 3] FIG. 3 is a view schematically showing the structure of the positive electrode plate produced using the positive electrode slurry including the positive electrode material in the present embodiment.
[FIG. 4] FIG. 4 is a view schematically showing the structure of a positive electrode plate produced using a positive electrode slurry including a positive electrode material in another embodiment of the present invention.
[FIG. 5] FIG. 5 is a view schematically showing Variation 1 of the positive electrode material.
[FIG. 6] FIG. 6 is a view schematically showing Variation 2 of the positive electrode material.
[FIG. 7] FIG. 7 is a view schematically showing Variation 3 of the positive electrode material.
[FIG. 8A] FIG. 8A is a photograph of the cross section of a positive electrode plate produced in Example 1, which was taken with an SEM.
[FIG. 8B] FIG. 8B is a photograph of the cross section of the positive electrode plate, which was taken with the SEM after a fluorine component in the positive electrode plate has been dyed.
[FIG. 9A] FIG. 9A is a photograph of the cross section of a positive electrode plate produced in Comparative Example 1, which was taken with the SEM.
[FIG. 9B] FIG. 9B is a photograph of the cross section of the positive electrode plate, which was taken with the SEM after a fluorine component in the positive electrode plate has been dyed.
[FIG. 10A] FIG. 10A is a photograph of the cross section of a positive electrode plate produced in Example 2, which was taken with the SEM.
[FIG. 10B] FIG. 10B is a photograph of the cross section of the positive electrode plate, which was taken with the SEM after a fluorine component in the positive electrode plate has been dyed.
[FIG. 11A] FIG. 11A is a photograph of the cross section of a positive electrode plate produced in Comparative Example 2, which was taken with the SEM.
[FIG. 11B] FIG. 11B is a photograph of the cross section of the positive electrode plate, which was taken with the SEM after a fluorine component in the positive electrode plate has been dyed.
[FIG. 12A] FIG. 12A is a photograph of the cross section of the positive electrode plate produced in Example 1 and embedded in a resin, which was taken with the SEM.

[FIG. 12B] FIG. 12B is a photograph showing a portion contacting a positive electrode active material with a line in a region where the fluorine component in the positive electrode plate is dyed.

[FIG. 13A] FIG. 13A is a photograph of the cross section of the positive electrode plate produced in Comparative Example 1 and embedded in a resin, which was taken with the SEM.

[FIG. 13B] FIG. 13B is a photograph showing a portion contacting a positive electrode active material with a line in a region where the fluorine component in the positive electrode plate is dyed.

[FIG. 14] FIG. 14 is a graph showing measurement results of cycle characteristics of a lithium-ion battery produced using a positive electrode material produced in Example 1.

[FIG. 15] FIG. 15 is a graph showing measurement results of cycle characteristics of a lithium-ion battery produced using a positive electrode material produced in Example 3.

DESCRIPTION OF EMBODIMENTS

Hereinafter, an embodiment of the present invention will be described in detail based on the drawings. Note that in the embodiment below, a positive electrode will be described as an example of an electrode of a secondary battery, but the present invention is not limited thereto and can also be applied to a negative electrode. That is, in the present specification, an "electrode" includes the positive electrode and the negative electrode. For example, an "electrode material" includes a positive electrode material and a negative electrode material, an "electrode active material" includes a positive electrode active material and a negative electrode active material, an "electrode mixture" includes a positive electrode mixture and a negative electrode mixture, and an "electrode slurry" includes a positive electrode slurry and a negative electrode slurry.

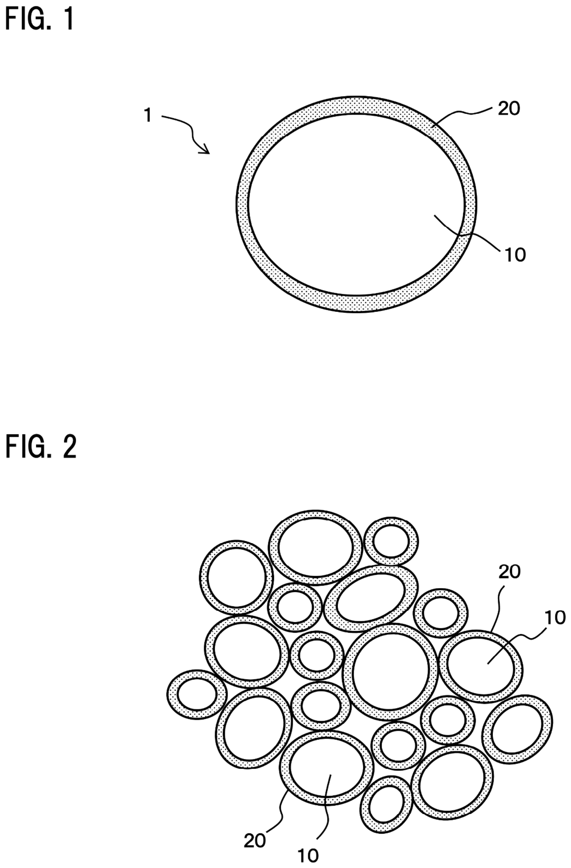

The positive electrode material in the present embodiment is a positive electrode material for a secondary battery, and as shown in a schematic view of FIG. 1, a positive electrode material 1 includes a positive electrode active material 10, and the entire surface of the positive electrode active material 10 is covered in a shell shape with a nonaqueous binder 20. Here, the nonaqueous binder 20 is made of a fluorine-based resin which is not dissolved in an aqueous solvent such as water, but can be dissolved in a nonaqueous solvent such as an organic solvent, and representative examples thereof includes polyvinylidene fluoride (PVDF), polytetrafluoroethylene (PTFE), a fluorine-based rubber, and the like.

The secondary battery to which the positive electrode material in the present embodiment is applied includes a lithium-ion secondary battery, a lithium-sulfur secondary battery, and the like. In the case of the lithium-ion secondary battery, the positive electrode active material includes lithium-containing composite oxides such as $LiCoO_2$, $LiNiO_2$, $LiNi_{0.8}Co_{0.2}O_2$, $LiMn_2O_4$, $LiFePO_4$, and $LiNiCoMnO_2$. Moreover, the positive electrode active material preferably includes two or more types of positive electrode active materials different from each other in a particle size. The positive electrode active material with a smaller particle size can be formed, for example, using a flux method.

The positive electrode material 1 in the present embodiment can be manufactured by a step of dissolving the powder of the nonaqueous binder 20 in the nonaqueous solvent and dispersing the powder of the positive electrode active material 10 in the nonaqueous solvent and a step of evaporating the nonaqueous solvent by heating and covering the entire surface of the positive electrode active material 10 in the shell shape with the nonaqueous binder 20. Note that the nonaqueous solvent is not necessarily dried by heating, but may be vacuum-dried at a room temperature.

Here, the nonaqueous solvent is made of a material in which the powder of the nonaqueous binder 20 can be dissolved, and includes an organic solvent such as N-methyl-2-pyrrolidone (NMP).

The amount of nonaqueous binder 20 to be used for the steps for manufacturing the positive electrode material 1 may be determined as necessary according to the amount of positive electrode active material 10 within a range in which the entire surface of the positive electrode active material 10 can be covered in the shell shape.

The positive electrode slurry in the present embodiment includes the positive electrode mixture having the above-described positive electrode material 1 and a conductive auxiliary agent, and the positive electrode mixture is dispersed in the aqueous solvent. Note that the nonaqueous binder 20 covering the surface of the positive electrode active material 10 is not dissolved in the aqueous solvent.

Here, the aqueous solvent is made of a material in which the powder of the nonaqueous binder 20 is not dissolved, and includes water and a dispersant such as polyvinylpyrrolidone (PVP). The conductive auxiliary agent preferably includes, but not limited to, a cellulose nanofiber. The aqueous solvent has a low viscosity, and therefore, the positive electrode slurry with a proper viscosity can be obtained using the cellulose nanofiber with high thickening characteristics as the conductive auxiliary agent.

A positive electrode plate in the present embodiment can be manufactured in such a manner that the above-described positive electrode slurry is applied onto a current collector and a coating film is then dried. Note that the coating film may be dried by thermal compression bonding of the positive electrode slurry and the current collector with a roll press or the like.

Since the positive electrode material 1 in the present embodiment is configured such that the entire surface of the positive electrode active material 10 is covered in the shell shape with the nonaqueous binder 20, even when the positive electrode slurry is produced by dispersing the positive electrode mixture including the positive electrode material 1 and the conductive auxiliary agent in the aqueous solvent, lithium in the positive electrode active material 10 is not dissolved into the aqueous solvent. As a result, a decrease in a positive electrode capacity due to dissolving of lithium into the aqueous solvent can be suppressed.

When the positive electrode plate is produced using the positive electrode slurry including the positive electrode material 1 in the present embodiment, the nonaqueous binder 20 is not dissolved in the aqueous solvent, and therefore, as shown in a schematic view of FIG. 2, the positive electrode active material 10 is uniformly dispersed in a state of the entire surface thereof being covered in the shell shape with the nonaqueous binder 20. Thus, the nonaqueous binder 20 is also uniformly dispersed, and therefore, over the entire positive electrode, the positive electrode active materials 10 and the positive electrode active material 10 and the current collector can be uniformly bound to each other with the nonaqueous binder 20. Consequently, the secondary battery with excellent cycle characteristics can be achieved.

Particularly, in a case where the positive electrode active material 10 includes two or more types of positive electrode active materials 10 different from each other in a particle size, the positive electrode active materials 10 are more uniformly dispersed, and therefore, binding between the positive electrode active materials 10 and between the positive electrode active material 10 and the current collector through the nonaqueous binder 20 is more enhanced, and as a result, the cycle characteristics are more improved.

Note that the positive electrode material 1 in the present embodiment has the structure in which the entire surface of the positive electrode active material 10 is covered in the shell shape with the nonaqueous binder 20, but also includes one having a structure in which only part of the surface is covered with the nonaqueous binder 20.

In a conventional case where a positive electrode slurry is produced by dispersing a positive electrode mixture including a nonaqueous binder 20 such as PVDF in an organic solvent, a conductive auxiliary agent, such as carbon black, included in the positive electrode mixture is not dissolved in the organic solvent, and a nanometer-level small hole sucks the organic solvent. This increases the amount of organic solvent to be used.

On the other hand, the organic solvent (nonaqueous solvent) is also used for producing the positive electrode material 1 in the present embodiment, but the organic solvent includes only the positive electrode active material 10 and the nonaqueous binder 20 which can be dissolved in the organic solvent. Thus, the amount of nonaqueous solvent to be used can be significantly reduced as compared to the conventional case where the positive electrode slurry is produced by dispersing the positive electrode mixture including the nonaqueous binder 20 such as PVDF in the organic solvent. As a result, the positive electrode in the present embodiment is manufactured using the positive electrode slurry produced by dispersing the positive electrode mixture including the positive electrode material 1 and the conductive auxiliary agent in the aqueous solvent, and therefore, the amount of nonaqueous solvent to be used for manufacturing the secondary battery can be significantly reduced.

Since the positive electrode material 1 in the present embodiment is configured such that the entire surface of the positive electrode active material 10 is covered in the shell shape with the nonaqueous binder 20, effects of suppressing a decrease in the positive electrode capacity and improving the cycle characteristics can be obtained. Thus, in order to obtain these effects, the amount of nonaqueous binder 20 to be used for the steps for manufacturing the positive electrode material 1 may be within the range in which the entire surface of the positive electrode active material 10 can be covered in the shell shape, according to the amount of positive electrode active material 10. Normally, the minimum amount of nonaqueous binder 20 including an extra amount may be used considering variation in the size of the positive electrode active material 10, variation in the steps for manufacturing the positive electrode material 1, and the like.

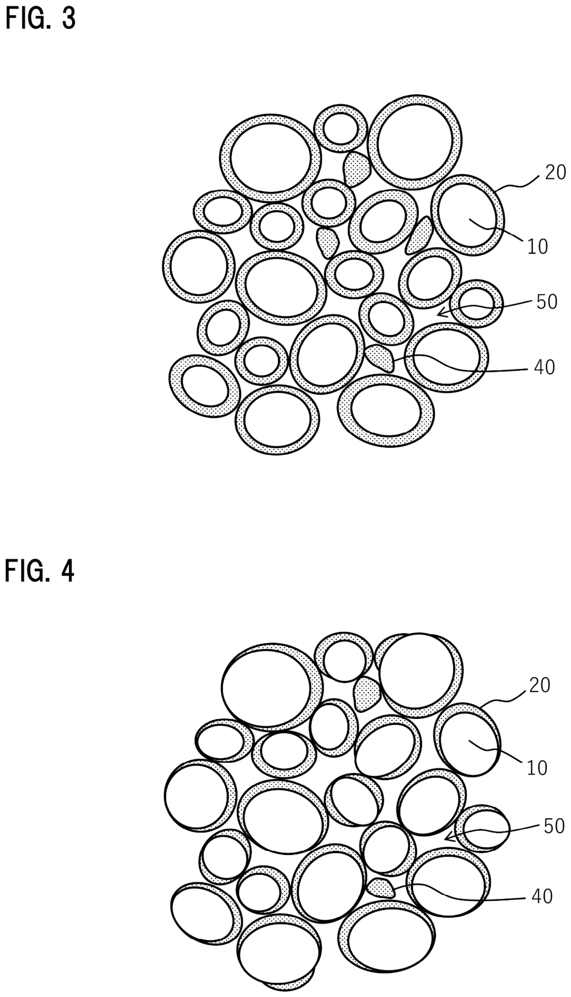

As described above, when the positive electrode plate is produced using the positive electrode slurry including the positive electrode material 1 in the present embodiment, the nonaqueous binder 20 is uniformly dispersed in a state of covering the entire surface of the positive electrode active material 10 in the shell shape, as shown in a schematic view of FIG. 3. In this state, since only the minimum amount of nonaqueous binder 20 is used, only the extra amount of nonaqueous binder 40 is present in a region 50 surrounded by the positive electrode active material 10 covered with the nonaqueous binder 20, and most part of the region 50 is a void space.

Thus, when the total volume of the nonaqueous binder 20 covering the entire surface of the positive electrode active material 10 is $V_1$ and the total volume of the nonaqueous binder 40 present in the region 50 surrounded by the positive electrode active material 10 covered with the nonaqueous binder 20 is $V_2$, a relationship of $V_1 > V_2$ is satisfied. Moreover, when the total volume of the region 50 surrounded by the positive electrode active material 10 covered with the nonaqueous binder 20 is $V_3$, a relationship of $V_3 > V_2$ is satisfied.

Note that the above-described relationship is $A_1 > A_2$ when the total area of the nonaqueous binder 20 covering the entire surface of the positive electrode active material 10 is $A_1$ and the total area of the nonaqueous binder 40 present in the region 50 surrounded by the positive electrode active material 10 covered with the nonaqueous binder 20 is $A_2$ when viewed in the cross section of the positive electrode mixture on the current collector, which is perpendicular to a film thickness direction. Moreover, when the total area of the region 50 surrounded by the positive electrode active material 10 covered with the nonaqueous binder 20 is $A_3$, $A_3 > A_2$ is satisfied.

Since the positive electrode material 1 in the present embodiment is configured such that the entire surface of the positive electrode active material 10 is covered in the shell shape with the nonaqueous binder 20, even when the positive electrode slurry is produced by dispersing the positive electrode mixture including the positive electrode material 1 and the conductive auxiliary agent in the aqueous solvent, lithium in the positive electrode active material 10 is not dissolved into the aqueous solvent, and therefore, a decrease in the positive electrode capacity can be suppressed.

When the positive electrode plate is produced using the positive electrode slurry including the positive electrode material 1 in the present embodiment, the nonaqueous binder 20 is not dissolved in the aqueous solvent, and therefore, the positive electrode active material 10 is uniformly dispersed in a state of the entire surface thereof being covered in the shell shape with the nonaqueous binder 20. Thus, the nonaqueous binder 20 is also uniformly dispersed, and therefore, over the entire positive electrode, the positive electrode active materials 10 and the positive electrode active material 10 and the current collector can be uniformly bound to each other with the nonaqueous binder 20. Consequently, the secondary battery with excellent cycle characteristics can be achieved.

Such an effect is obtained by covering the surface of the positive electrode active material 10 in the shell shape with the nonaqueous binder 20, and therefore, the entire surface of the positive electrode active material 10 is not necessarily fully covered in the shell shape with the nonaqueous binder 20, and such an effect can also be obtained even in a case where part of the surface of the positive electrode active material 10 is covered in the shell shape with the nonaqueous binder 20.

For example, when the same amount of nonaqueous binder 20 is used and a case where the positive electrode plate is produced using the positive electrode slurry obtained by dispersing, in the aqueous solvent, the positive electrode mixture including the positive electrode material 1 formed such that part of the surface of the positive electrode active material 10 is covered in the shell shape with the nonaqueous binder 20 in the present embodiment and a case where the positive electrode plate is produced using the positive electrode slurry obtained by dispersing, in the organic solvent, the positive electrode mixture including the nonaqueous binder 20 in the conventional method are compared to each other, it has been confirmed that the secondary battery produced in the present embodiment has better characteristics in terms of the positive electrode capacity and the cycle characteristics than the secondary battery produced by the conventional method.

The positive electrode material 1 configured such that part of the surface of the positive electrode active material 10 is covered in the shell shape with the nonaqueous binder 20 may be manufactured by setting the amount of nonaqueous binder 20 to be used for the steps for manufacturing the positive electrode material 1 to a range in which part of the surface of the positive electrode active material 10 can be covered in the shell shape.

Note that in order to obtain the effects of the present invention in a case where part of the surface of the positive electrode active material 10 is covered in the shell shape with the nonaqueous binder 20, 50% or more of the surface of the positive electrode active material 10 is preferably covered with the nonaqueous binder 20, and 70% or more of the surface of the positive electrode active material 10 is more preferably covered with the nonaqueous binder 20.

When the positive electrode plate is produced using the positive electrode slurry including such a positive electrode material 1, the positive electrode active material 10 is uniformly dispersed in a state of part of the surface thereof being covered in the shell shape with the nonaqueous binder 20, as shown in a schematic view of FIG. 4. In this state, only a smaller amount of nonaqueous binder 20 is used as compared to a case where the entire surface of the positive electrode active material 10 is covered in the shell shape with the nonaqueous binder 20, and therefore, little nonaqueous binder 40 is present in the region 50 surrounded by the positive electrode active material 10 covered with the nonaqueous binder 20, and such a region 50 is a void space.

Thus, similarly to a case where the entire surface of the positive electrode active material 10 is covered in the shell shape with the nonaqueous binder 20, when the total volume of the nonaqueous binder 20 covering part of the surface of the positive electrode active material 10 is $V_1$ and the total volume of the nonaqueous binder 40 present in the region 50 surrounded by the positive electrode active material 10 covered with the nonaqueous binder 20 is $V_2$, a relationship of $V_1 > V_2$ is satisfied. Moreover, when the total volume of the region 50 surrounded by the positive electrode active material 10 covered with the nonaqueous binder 20 is $V_3$, a relationship of $V_3 > V_2$ is satisfied.

Note that the above-described relationship is $A_1 > A_2$ when the total area of the nonaqueous binder 20 covering part of the surface of the positive electrode active material 10 is $A_1$ and the total area of the nonaqueous binder 40 present in the region 50 surrounded by the positive electrode active material 10 covered with the nonaqueous binder 20 is $A_2$ when viewed in the cross section of the positive electrode mixture on the current collector, which is perpendicular to the film thickness direction. Moreover, when the total area of the region 50 surrounded by the positive electrode active material 10 covered with the nonaqueous binder 20 is $A_3$, $A_3 > A_2$ is satisfied.

<Variations>

In the above-described embodiment, the positive electrode material 1 has the structure in which the entire surface or part of the surface of the positive electrode active material 10 is covered in the shell shape with the nonaqueous binder 20. However, when the thickness of the nonaqueous binder 20 as the cover is too great, the electrical resistance of the surface of the positive electrode active material 10 increases, and for this reason, a battery capacity may decrease. In the present variation, the structure of the positive electrode material 1 capable of suppressing a decrease in the battery capacity due to an increase in the thickness of the nonaqueous binder 20 will be described.

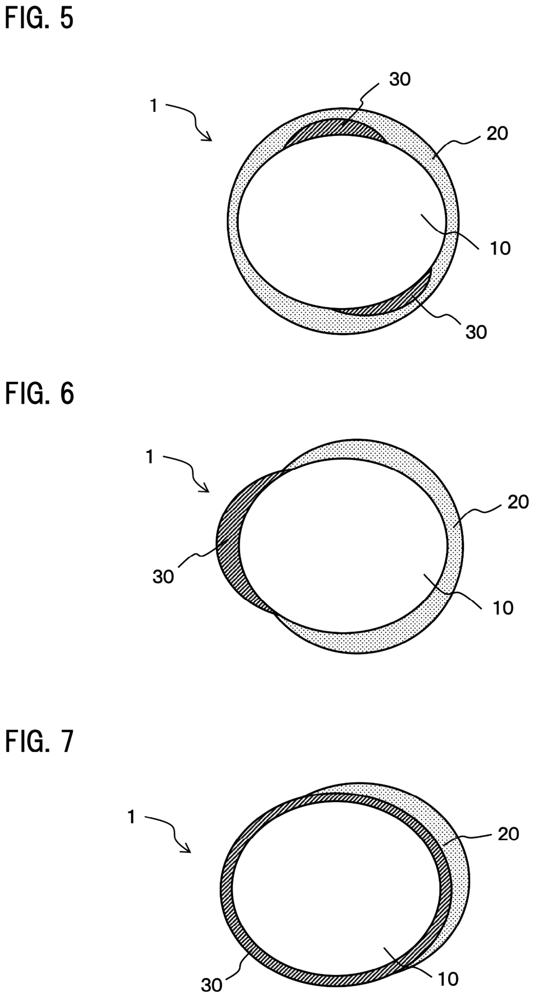

FIG. 5 is a view schematically showing Variation 1 of the positive electrode material 1, part of the surface of the positive electrode active material 10 is covered with a metal oxide 30, and the nonaqueous binder 20 covers the entire surface of the positive electrode active material 10 in the shell shape so as to cover the metal oxide 30. With this structure, an increase in the electrical resistance of the surface of the positive electrode active material 10 can be suppressed, and therefore, a decrease in the battery capacity can be suppressed while the effect of improving the binding by the nonaqueous binder 20 (improving the cycle characteristics) is maintained.

The positive electrode material 1 in Variation 1 can be manufactured by performing a step of adhering the metal oxide 30 to part of the surface of the positive electrode active material 10 before a step of covering the entire surface of the positive electrode active material 10 in the shell shape with the nonaqueous binder 20. In this manner, the nonaqueous binder 20 can cover the entire surface of the positive electrode active material 10 in the shell shape so as to cover the metal oxide 30.

The metal oxide 30 covering the surface of the positive electrode active material 10 is not particularly limited as long as the metal oxide 30 is a material with a low electrical resistance, and for example, a titanium oxide, a niobium oxide, a titanium-containing oxide, or the like can be used. The surface of the positive electrode active material 10 can be covered with the metal oxide 30 in such a manner that, for example, the positive electrode active material 10 and the metal oxide 30 are mixed and such a mixture is sintered or fired.

FIG. 6 is a view schematically showing Variation 2 of the positive electrode material 1, and the entire surface of the positive electrode active material 10 is covered in the shell shape with either the nonaqueous binder 20 or the metal oxide 30.

FIG. 7 is a view schematically showing Variation 3 of the positive electrode material 1, the entire surface of the positive electrode active material 10 is covered in the shell shape with the metal oxide 30, and part of the surface of the metal oxide 30 is covered with the nonaqueous binder 20.

In the positive electrode materials 1 having the structures shown in FIGS. 6 and 7, the entire surface of the positive electrode active material 10 is not covered with the nonaqueous binder 20, but part of the surface or the entire surface of the positive electrode active material 10 is covered with the metal oxide 30. Thus, a decrease in the battery capacity can be suppressed while the effect of improving the binding by the nonaqueous binder 20 is maintained.

The positive electrode materials 1 having the structures shown in FIGS. 6 and 7 can be manufactured by a step of adhering the metal oxide 30 to part of the surface or the entire surface of the positive electrode active material 10, a step of dissolving the powder of the nonaqueous binder 20 in the nonaqueous solvent and dispersing, in the nonaqueous solvent, the powder of the positive electrode active material 10 to the surface of which the metal oxide 30 adheres, and a step of evaporating the nonaqueous solvent.

The amount of metal oxide 30 to be used for the steps for manufacturing the positive electrode material 1 may be determined as necessary according to the amount of positive electrode active material 10 within a range in which part of the surface or the entire surface of the positive electrode active material 10 can be covered.

Examples

Hereinafter, the present invention will be described in more details with reference to examples, but the present invention is not limited to the examples below.

[Example 1]

<Production of Positive Electrode Material>

Powder of a nonaqueous binder (PVDF) of 0.05 g was dissolved in a nonaqueous solvent (NMP solvent) of 0.45 g, and powder of a positive electrode active material (lithium iron phosphate (LiFePO$_4$)) of 0.95 g was dispersed in the nonaqueous solvent. Thereafter, the nonaqueous solvent was heated at 100°C for two minutes and evaporated. In this manner, a positive electrode material 1 is produced such that the surface of a positive electrode active material 10 is covered in a shell shape with a nonaqueous binder.

<Production of Positive Electrode Plate>

The positive electrode material 1 produced by the above-described method, a conductive auxiliary agent (including cellulose nanofibers), and a dispersant were mixed in an aqueous solvent (pure water) at a mass ratio of 95:4:1, and a positive electrode slurry was produced.

The positive electrode slurry was applied to a positive electrode current collector (aluminum foil), and was heated for six minutes and dried. Thereafter, the resultant was pressed together with the aluminum foil, and in this manner, a positive electrode plate was produced.

[Example 2]

A positive electrode plate was produced in a method similar to that of Example 1, except that a ternary (LiNiCoMnO$_2$) material was used as a positive electrode active material.

[Comparative Example 1]

By the conventional method, a positive electrode active material (lithium iron phosphate), a conductive auxiliary agent (acetylene black), and a binder (PVDF) was mixed in an organic solvent (NMP) at a mass ratio of 90:5:5, and in this manner, a positive electrode slurry was formed. Then, a positive electrode plate was produced in a method similar to that of Example 1.

[Comparative Example 2]

A positive electrode plate was produced in a method similar to that of Comparative Example 1, except that a ternary (LiNiCoMnO$_2$) material was used as a positive electrode active material.

<Evaluation of Dispersion State of Nonaqueous Binder in Positive Electrode Plate>

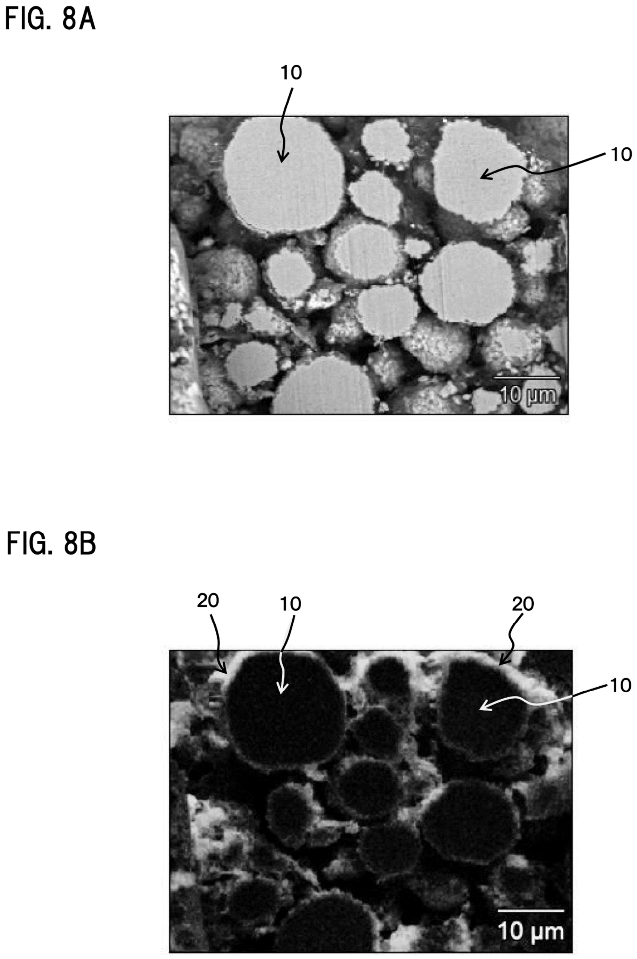

FIG. 8A is a photograph of the cross section of the positive electrode plate produced in Example 1, which was taken with a scanning electron microscope (SEM), and FIG. 8B is a photograph of a fluorine component (PVDF) in the cross section of the positive electrode plate at the same position, which was taken by an energy dispersive spectroscopy (EDS) and in which a region where the fluorine component is detected by the EDS was dyed and highlighted.

Note that the photograph of the cross section taken with the SEM was acquired in such a manner that the cross section of a sample of the produced positive electrode plate is produced using a focused ion beam (FIB) and thereafter the cross section subjected to conductive treatment is photographed under conditions where an acceleration voltage is 15 kV and a magnification is 2000.

As shown in FIG. 8B, on the surface of the positive electrode active material 10, it was confirmed that many regions are covered in the shell shape with the nonaqueous binder (PVDF) 20. Moreover, it was confirmed that the amount of binder (PVDF) present in a gap between the positive electrode active materials 10 is small.

That is, it was confirmed that a relationship of $V_1 > V_2$ is satisfied when the total volume of the binder (PVDF) 20 covering the surface of the positive electrode active material 10 is $V_1$ and the total volume of the binder (PVDF) 20 present in the region surrounded by the positive electrode active material 10 covered with the binder (PVDF) 20 is $V_2$. Moreover, it was confirmed that a relationship of $V_3 > V_2$ is satisfied when the total volume of the region surrounded by the positive electrode active material 10 covered with the binder (PVDF) 20 is $V_3$.

It was confirmed that in the cross section of the positive electrode mixture, a relationship of $A_1 > A_2$ is satisfied when the total area of the binder (PVDF) 20 covering the surface of the positive electrode active material 10 is $A_1$ and the total area of the binder (PVDF) 20 present in the region surrounded by the positive electrode active material 10 covered with the binder (PVDF) 20 is $A_2$. Moreover, it was confirmed that a relationship of $A_3 > A_2$ is satisfied when the total area of the region surrounded by the positive electrode active material 10 covered with the binder (PVDF) 20 is $A_3$.

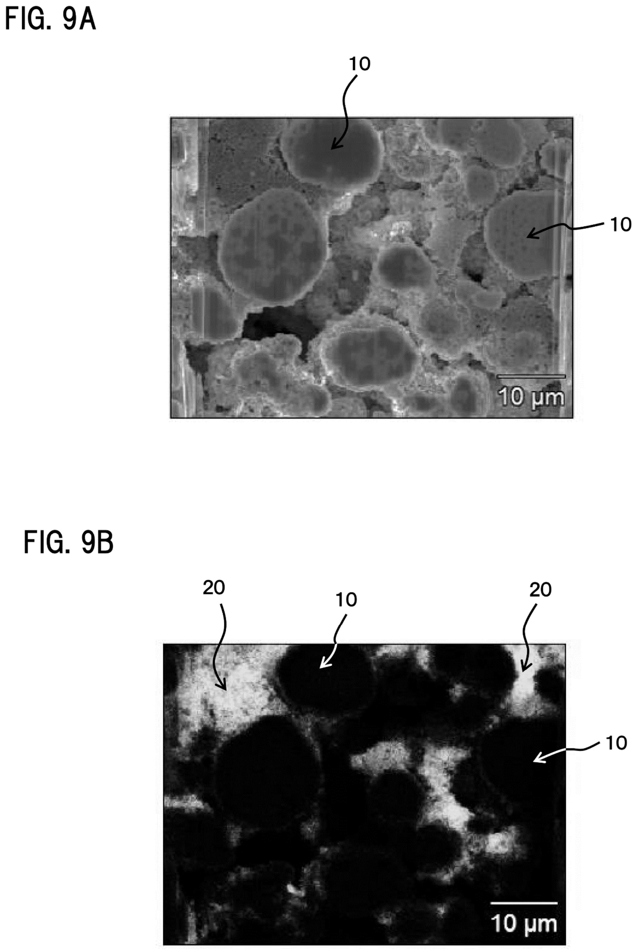

On the other hand, FIG. 9A is a photograph of the cross section of the positive electrode plate produced in Comparative Example 1, which was taken with the SEM, and FIG. 9B is a photograph of a fluorine component (PVDF) in the cross section of the positive electrode plate at the same position, which was taken by the energy dispersive spectroscopy (EDS) and in which a region where the fluorine component is detected by the EDS was dyed and highlighted. Note that the photograph of the cross section taken with the SEM was acquired under the same conditions as those of Example 1.

As shown in FIG. 9B, in the positive electrode plate produced in Comparative Example 1, it was confirmed that the binder (PVDF) 20 is dispersed between the positive electrode active materials 10, but few regions covered in the shell shape with the binder (PVDF) were confirmed on the surface of the positive electrode active material 10. That is, in the positive electrode plate produced in Comparative Example 1, it was confirmed that the binder (PVDF) was present in a state of being pushed into a gap between the positive electrode active materials 10. That is, it was confirmed that the binder (PVDF) is not present around the positive electrode active material 10 in a state of covering the positive electrode active material 10 in the shell shape with the thin film as in Example 1 and is present so as to fill the gap between the positive electrode active materials 10.

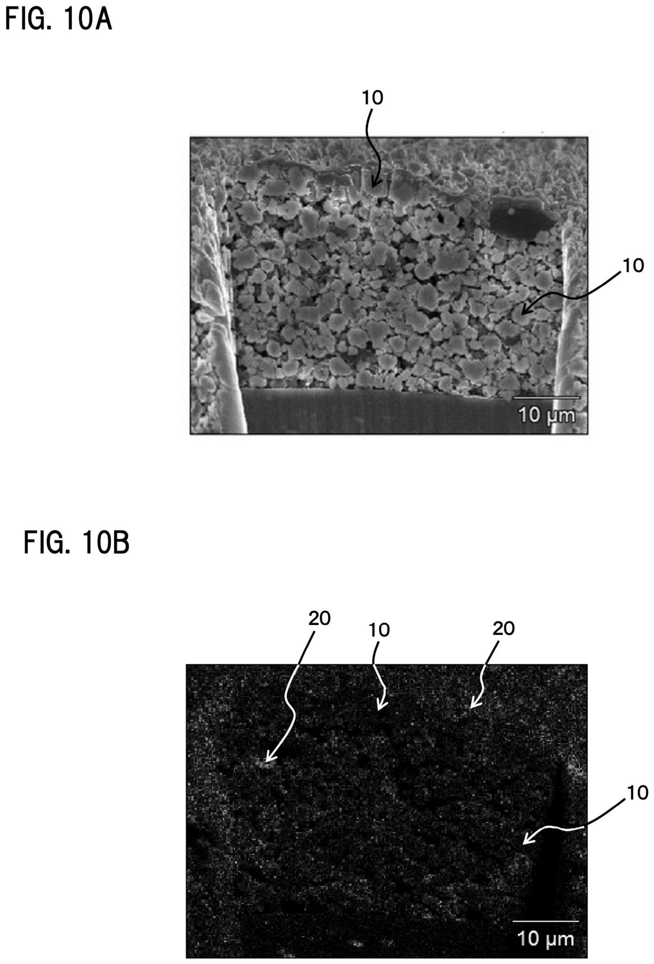

FIG. 10A is a photograph of the cross section of the positive electrode plate produced in Example 2, which was taken with the SEM, and the particle size of the positive electrode active material (LiNiCoMnO$_2$) used in Example 2 is smaller than the particle size of the positive electrode active material (LiFePO$_4$) used in Example 1. FIG. 10B is a photograph of a fluorine component (PVDF) in the cross section of the positive electrode plate at the same position, which was taken by the energy dispersive spectroscopy (EDS) and in which a region where the fluorine component is detected by the EDS was dyed and highlighted. Note that the photograph of the cross section taken with the SEM was acquired under the same conditions as those of Example 1.

As shown in FIG. 10B, similarly to Example 1, on the surface of the positive electrode active material 10 in the positive electrode plate produced in Example 2, it was confirmed that many regions are covered in the shell shape with the nonaqueous binder (PVDF) 20. Moreover, it was confirmed that the amount of binder (PVDF) present in a gap between the positive electrode active materials 10 is small.

That is, it was confirmed that a relationship of $V_1 > V_2$ is satisfied when the total volume of the binder (PVDF) 20 covering the surface of the positive electrode active material 10 is $V_1$ and the total volume of the binder (PVDF) 20 present in the region surrounded by the positive electrode active material 10 covered with the binder (PVDF) 20 is $V_2$. Moreover, it was confirmed that a relationship of $V_3 > V_2$ is satisfied when the total volume of the region surrounded by the positive electrode active material 10 covered with the binder (PVDF) 20 is $V_3$.

It was confirmed that in the cross section of the positive electrode mixture, a relationship of $A_1 > A_2$ is satisfied when the total area of the binder (PVDF) 20 covering the surface of the positive electrode active material 10 is $A_1$ and the total area of the binder (PVDF) 20 present in the region surrounded by the positive electrode active material 10 covered with the binder (PVDF) 20 is $A_2$. Moreover, it was confirmed that a relationship of $A_3 > A_2$ is satisfied when the total area of the region surrounded by the positive electrode active material 10 covered with the binder (PVDF) 20 is $A_3$.

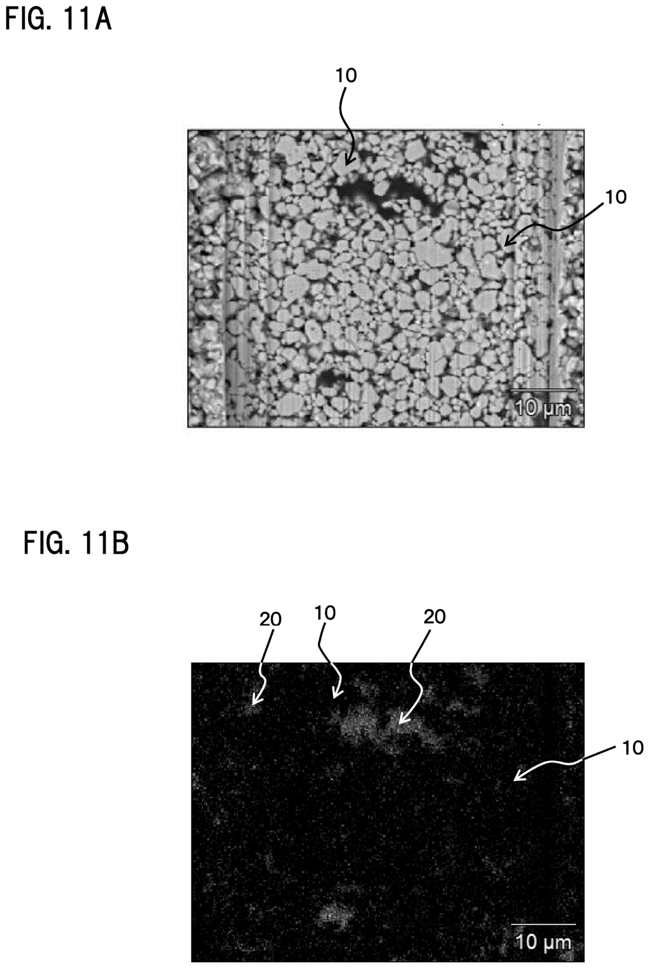

On the other hand, FIG. 11A is a photograph of the cross section of the positive electrode plate produced in Comparative Example 2, which was taken with the SEM, and FIG. 11B is a photograph of a fluorine component (PVDF) in the cross section of the positive electrode plate at the same position, which was taken by the energy dispersive spectroscopy (EDS) and in which a region where the fluorine component is detected by the EDS was dyed and highlighted. Note that the photograph of the cross section taken with the SEM was acquired under the same conditions as those of Example 1.

As shown in FIG. 11B, in the positive electrode plate produced in Comparative Example 2, it was confirmed similarly to Comparative Example 1 that the binder (PVDF) 20 is dispersed between the positive electrode active materials 10, but few regions covered in the shell shape with the binder (PVDF) were confirmed on the surface of the positive electrode active material 10. That is, in the positive electrode plate produced in Comparative Example 2, it was confirmed that the binder (PVDF) was present in a state of being pushed into a gap between the positive electrode active materials 10. That is, it was confirmed that the binder (PVDF) is not present around the positive electrode active material 10 in a state of covering the positive electrode active material 10 in the shell shape with the thin film as in Example 1 and is present so as to fill the gap between the positive electrode active materials 10.

<Measurement of Coverage>

Based on the SEM photograph of FIG. 8B (Example 1) and the SEM photograph of FIG. 9B (Comparative Example 1), a coverage C (%) defined by Expression (1) below was measured for the cross section of the positive electrode mixture formed on the positive electrode current collector.

$$C = (C_2 \div C_1) \times 100 \ldots (1)$$

In Expression (1), $C_1$ represents the peripheral length of the positive electrode active material 10, and $C_2$ represents the total length of a portion of the binder (PVDF) contacting the periphery of the positive electrode active material 10.

As a result, in the positive electrode plate produced in Example 1, the coverage was 60%, and on the other hand, in the positive electrode plate produced in Comparative Example 1, the coverage was 23%.

In a case where the cross section of the positive electrode plate is observed with the SEM, there is a probability that the binder (PVDF) present on the far side of the cross section is also imaged as one present on the same plane as that of the cross section. For this reason, in order to avoid such influence, the positive electrode plates produced in Example 1 and Comparative Example 1 were embedded in a resin, the cross sections of the positive electrode plates embedded in the resin were produced using a broad ion beam (BIB) method, and thereafter, the photographs of the cross sections subjected to the conductive treatment were taken with the SEM under the conditions where the acceleration voltage is 15 kV and the magnification is 3000.

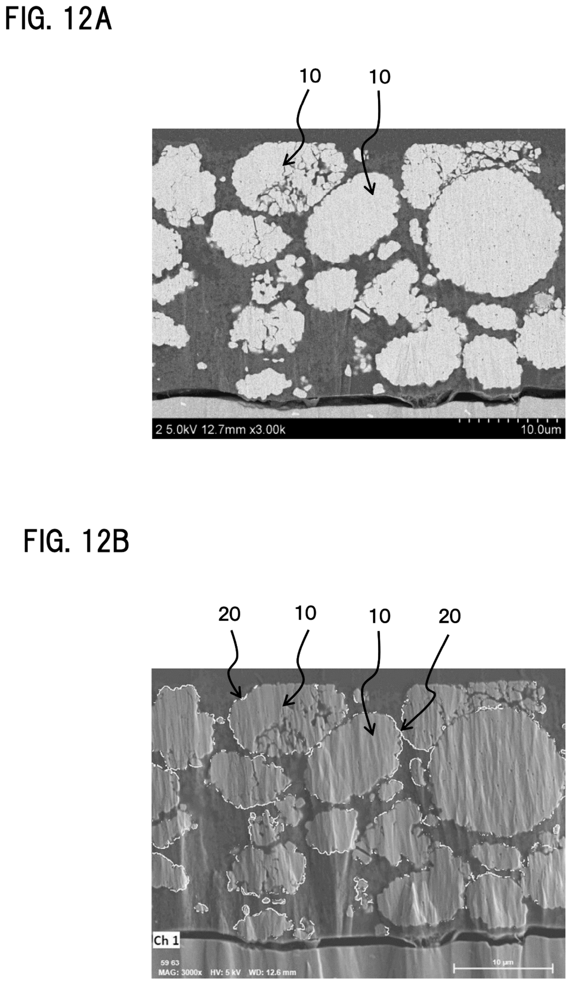

FIG. 12A is a photograph of the cross section of the positive electrode plate produced in Example 1 and embedded in the resin, which was taken with the SEM, and FIG. 12B is a photograph of a fluorine component (PVDF) in the cross section of the positive electrode plate at the same position, which was taken by the energy dispersive spectroscopy (EDS) and in which in a region where a region where the fluorine component is detected by the EDS is dyed and highlighted, a portion 20 contacting the positive electrode active material 10 was shown with a line.

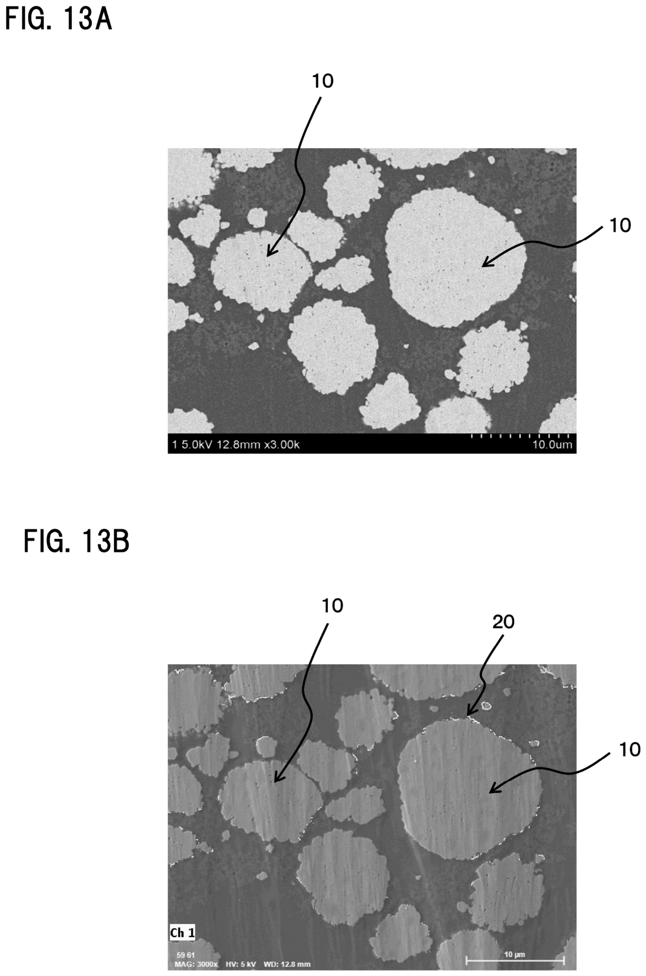

Similarly, FIG. 13A is a photograph of the cross section of the positive electrode plate produced in Comparative Example 1 and embedded in the resin, which was taken with the SEM, and FIG. 13B is a photograph of a fluorine component (PVDF) in the cross section of the positive electrode plate at the same position, which was taken by the energy dispersive spectroscopy (EDS) and in which in a region where a region where the fluorine component is detected by the EDS is dyed and highlighted, a portion 20 contacting the positive electrode active material 10 was shown with a line.

Based on the SEM photograph of FIG. 12B (Example 1) and the SEM photograph of FIG. 13B (Comparative Example 1), the coverage C (%) defined by Expression (1) above was measured for the cross section of the positive electrode mixture formed on the positive electrode current collector. As a result, in the positive electrode plate produced in Example 1, the coverage was 37%, and on the other hand, in the positive electrode plate produced in Comparative Example 1, the coverage was 10%.

Note that the reason why the coverage C in the positive electrode plate embedded in the resin is smaller than the coverage C in the positive electrode plate not embedded in the resin is assumed to be that in a case where the positive electrode plate is embedded in the resin, when the resin is hardened by heating after the positive electrode plate has been embedded in the resin, part of the binder (PVDF) coated particularly thin is peeled off from the surface of the positive electrode active material 10 due to influence of a difference in expansion coefficient between the positive electrode active material and the resin or the like.

From the above-described results, in the cross section of the positive electrode mixture formed on the positive electrode current collector, the coverage C in the positive electrode plate embedded in the resin is preferably 30% or more.

<Evaluation of Cycle Characteristics of Lithium-Ion Secondary Battery>

The positive electrode plate produced in Example 1 and a negative electrode plate (lithium metal foil) were wound with a separator interposed therebetween, and in this manner, an electrode body was produced. The electrode body was housed in a battery case together with a nonaqueous electrolysis solution, and in this manner, a lithium-ion secondary battery was produced.

The produced lithium-ion secondary battery was repeatedly charged and discharged at a charge/discharge rate of 1C, and then, a change in a discharge capacity [mAh/g] was measured and cycle characteristics were measured.

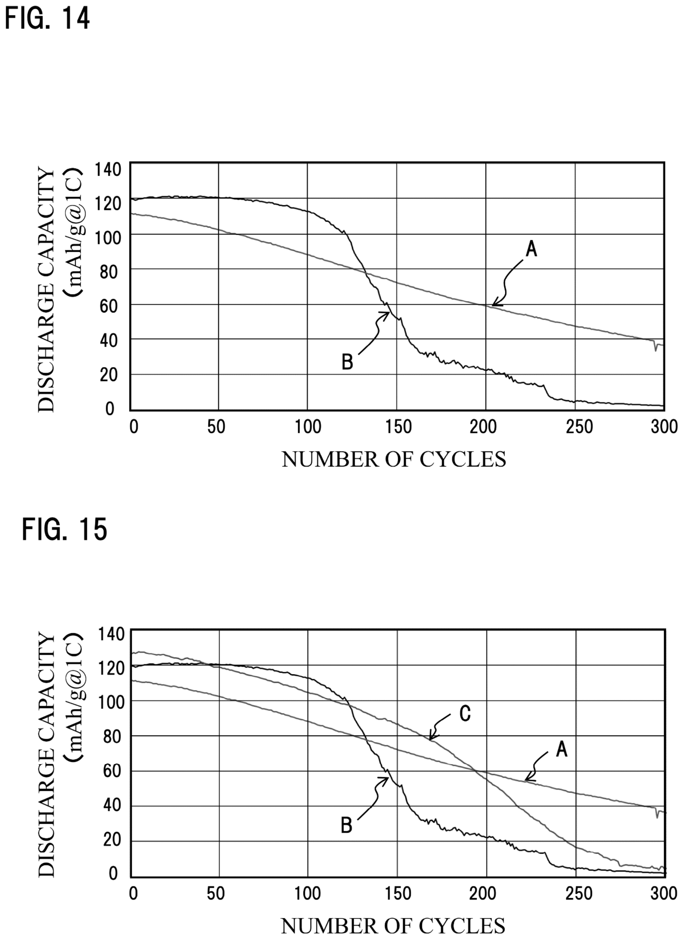

FIG. 14 is a graph showing measurement results of the cycle characteristics, a graph indicated by an arrow A indicates the cycle characteristics of the lithium-ion secondary battery produced using the positive electrode material of Example 1, and a graph indicated by an arrow B indicates cycle characteristics of a lithium-ion secondary battery produced using the positive electrode material of Comparative Example 1.

As shown in FIG. 14, the cycle characteristics of the lithium-ion secondary battery produced using the positive electrode material of Example 1 showed that the number of cycles until the discharge capacity decreases from an initial capacity to 1/3 is improved about twice as compared to the cycle characteristics of the lithium-ion secondary battery produced using the positive electrode material of Comparative Example 1. The reason for this result is assumed to be that the nonaqueous binder 20 is also uniformly dispersed because the positive electrode active material 10 is uniformly dispersed in a state of the entire surface thereof being covered in the shell shape with the nonaqueous binder 20, and therefore, over the entire positive electrode, the positive electrode active materials 10 and the positive electrode active material 10 and the current collector are uniformly bound to each other with the nonaqueous binder 20.

As shown in FIG. 14, the initial capacity of the lithium-ion secondary battery produced using the positive electrode material of Example 1 is slightly lower than the initial capacity of the lithium-ion secondary battery produced using the positive electrode material of Comparative Example 1. The reason for this state is assumed to be that the entire surface of the positive electrode active material 10 is covered in the shell shape with the nonaqueous binder 20, and therefore, the electrical resistance of the surface of the positive electrode active material 10 increases.

[Example 3]

<Production of Positive Electrode Material>

Powder of a positive electrode active material (lithium iron phosphate) and powder of a metal oxide (titanium oxide and niobium oxide) were mixed at a mass ratio of 99.8:0.2, this mixture was sintered at a temperature of 800°C for 180 minutes, and a metal oxide 30 adhered to the surface of a positive electrode active material 10.

Thereafter, by a method similar to that of Example 1, a nonaqueous binder (PVDF) covered the entire surface of the positive electrode active material 10 in a shell shape so as to cover the metal oxide, and in this manner, a positive electrode material 1 having the structure shown in FIG. 5 was produced.

<Evaluation of Cycle Characteristics of Lithium-Ion Secondary Battery>

Using the positive electrode material 1 produced in Example 3, a lithium-ion secondary battery was produced by a method similar to that of Example 1, and cycle characteristics were measured.

FIG. 15 is a graph showing measurement results of the cycle characteristics, a graph indicated by an arrow A indicates the cycle characteristics of the lithium-ion secondary battery produced using the positive electrode material of Example 1, a graph indicated by an arrow B indicates the cycle characteristics of the lithium-ion secondary battery produced using the positive electrode material of Comparative Example 1, and a graph indicated by an arrow C indicates the cycle characteristics of the lithium-ion secondary battery produced using the positive electrode material of Example 3.

As shown in FIG. 15, the initial capacity of the lithium-ion secondary battery produced using the positive electrode material of Example 3 was improved as compared to the initial capacity of the lithium-ion secondary battery produced using the positive electrode material of Example 1. The reason for this state is assumed to be that the metal oxide 30 with a low electrical resistance adheres to the surface of the positive electrode active material 10 and therefore an increase in the electrical resistance of the surface of the positive electrode active material 10 can be suppressed. Note that the improvement in the cycle characteristics by covering the entire surface of the positive electrode active material 10 in the shell shape with the nonaqueous binder 20 was maintained.

The present invention has been described above with reference to the preferred embodiments, but the description thereof is not limited and various changes can be made, needless to say.

For example, in the above-described embodiments, as the method for manufacturing the positive electrode material 1, the method in which the entire surface of the positive electrode active material 10 is covered in the shell shape with the nonaqueous binder 20 in such a manner that the powder of the nonaqueous binder 20 is dissolved in the nonaqueous solvent, the powder of the positive electrode active material 10 is dispersed in the nonaqueous solvent, and the nonaqueous solvent is then evaporated has been described, but the present invention is not limited thereto. For example, as long as the average particle size of the nonaqueous binder 20 is smaller than the average particle size of the positive electrode active material 10 by about the half or less, the positive electrode material 1 may be produced without using the aqueous solvent such as water and the nonaqueous solvent such as an organic solvent by mixing/heating the refined powder of the nonaqueous binder 20. In this case, the average particle size of the positive electrode active material 10 is preferably within a range of 1 $\mu$m to 10 $\mu$m.

In the above-described embodiments, the positive electrode has been described as the example of the electrode of the secondary battery, but even in a case where the negative electrode active material including lithium, such as lithium titanate ($Li_4Ti_5O_{12}$), is used for the negative electrode, a decrease in a negative electrode capacity can be suppressed because lithium in the negative electrode active material is not dissolved into the aqueous solvent. Moreover, in a case where the negative electrode active material such as black lead or silicon is used for the negative electrode, the secondary battery with excellent cycle characteristics can also be achieved because the negative electrode active materials and the negative electrode active material and the current collector are bound to each other with the nonaqueous binder dispersed uniformly.

DESCRIPTION OF REFERENCE CHARACTERS

| 1 | Positive Electrode Material (Electrode Material) |
| 10 | Positive Electrode Active Material (Electrode Active Material) |
| 20, 40 | Nonaqueous Binder |
| 30 | Metal Oxide |
| 50 | Region Surrounded by Positive Electrode Active Material Covered with Nonaqueous Binder |

**Claims**

1. An electrode material for a secondary battery, comprising:

   an electrode active material,
   wherein an entire surface of the electrode active material is covered in a shell shape with a nonaqueous binder.

2. The electrode material according to claim 1, wherein

   part of the surface of the electrode active material is covered with a metal oxide, and
   the nonaqueous binder covers the entire surface of the electrode active material in the shell shape so as to cover the metal oxide.

3. An electrode material for a secondary battery, comprising:

   an electrode active material,
   wherein an entire surface of the electrode active material is covered in a shell shape with either a nonaqueous binder or a metal oxide.

4. An electrode material for a secondary battery, comprising:

   an electrode active material,
   wherein an entire surface of the electrode active material is covered in a shell shape with a metal oxide, and
   part of a surface of the metal oxide is covered with a nonaqueous binder.

5. The electrode material according to any one of claims 1 to 4, wherein
   the nonaqueous binder includes a fluorine-based resin.

**6.** The electrode material according to any one of claims 1 to 4, wherein
the electrode active material includes a positive electrode active material.

**7.** The electrode material according to any one of claims 1 to 4, wherein
the electrode active material includes a lithium-containing composite oxide.

**8.** An electrode slurry comprising:

an electrode mixture,
wherein the electrode mixture includes the electrode material according to any one of claims 1 to 4 and a conductive auxiliary agent, and
the electrode mixture is dispersed in an aqueous solvent.

**9.** The electrode slurry according to claim 8, wherein
the nonaqueous binder covering the surface of the electrode active material is not dissolved in the aqueous solvent.

**10.** The electrode slurry according to claim 8, wherein
the conductive auxiliary agent includes a cellulose nanofiber.

**11.** A method for manufacturing an electrode material for a secondary battery, comprising:

a step of dissolving powder of a nonaqueous binder in a nonaqueous solvent and dispersing powder of an electrode active material in the nonaqueous solvent; and
a step of evaporating the nonaqueous solvent and covering an entire surface of the electrode active material in a shell shape with the nonaqueous binder.

**12.** The method for manufacturing the electrode material according to claim 11, further comprising:

before the two steps, a step of adhering a metal oxide to part of the surface of the electrode active material,
wherein the nonaqueous binder covers the entire surface of the electrode active material in the shell shape so as to cover the metal oxide.

**13.** A method for manufacturing an electrode material for a secondary battery, comprising:

a step of adhering a metal oxide to part of a surface of an electrode active material;
a step of dissolving powder of a nonaqueous binder in a nonaqueous solvent and dispersing, in the nonaqueous solvent, powder of the electrode active material to the surface of which the metal oxide adheres; and
a step of evaporating the nonaqueous solvent, wherein in the step of evaporating the nonaqueous solvent, the entire surface of the electrode active material is covered in a shell shape with either the nonaqueous binder or the metal oxide.

**14.** A method for manufacturing an electrode material for a secondary battery, comprising:

a step of adhering a metal oxide to an entire surface of an electrode active material;
a step of dissolving powder of a nonaqueous binder in a nonaqueous solvent and dispersing, in the nonaqueous solvent, powder of the electrode active material to the entire surface of which the metal oxide adheres; and
a step of evaporating the nonaqueous solvent, wherein in the step of evaporating the nonaqueous solvent, part of a surface of the metal oxide is covered with the nonaqueous binder.

**15.** An electrode for a secondary battery, comprising:

an electrode mixture formed on a current collector,
wherein the electrode mixture includes the electrode material according to any one of claims 1 to 4 and a conductive auxiliary agent,
the electrode active material in the electrode material is dispersed in a state of the entire surface thereof being covered in the shell shape with the nonaqueous binder, and
when a total volume of the nonaqueous binder covering the entire surface of the electrode active material is $V_1$ and a total volume of the nonaqueous binder present in a region surrounded by the electrode active material covered with the nonaqueous binder is $V_2$, $V_1 > V_2$ is satisfied.

**16.** An electrode for a secondary battery, comprising:

an electrode mixture formed on a current collector,
wherein the electrode mixture includes the electrode material according to any one of claims 1 to 4 and a conductive auxiliary agent,
the electrode active material in the electrode material is dispersed in a state of the entire surface thereof being covered in the shell shape with the nonaqueous binder, and
when a total area of the nonaqueous binder covering the entire surface of the electrode active material is $A_1$ and a total area of the nonaqueous binder present in a region surrounded by the electrode active material covered with the

nonaqueous binder is $A_2$ in a cross section of the electrode mixture, $A_1 > A_2$ is satisfied.

17. An electrode for a secondary battery, comprising:

an electrode mixture formed on a current collector,
wherein the electrode mixture includes the electrode material according to any one of claims 1 to 4 and a conductive auxiliary agent,
the electrode active material in the electrode material is uniformly dispersed in a state of the entire surface thereof being covered in the shell shape with the nonaqueous binder, and when a total volume of a region surrounded by the electrode active material covered with the nonaqueous binder is $V_3$ and a total volume of the nonaqueous binder present in the region surrounded by the electrode active material covered with the nonaqueous binder is $V_2$, $V_3 > V_2$ is satisfied.

18. An electrode for a secondary battery, comprising:

an electrode mixture formed on a current collector,
wherein the electrode mixture includes the electrode material according to any one of claims 1 to 4 and a conductive auxiliary agent,
the electrode active material in the electrode material is uniformly dispersed in a state of the entire surface thereof being covered in the shell shape with the nonaqueous binder, and when a total area of a region surrounded by the electrode active material covered with the nonaqueous binder is $A_3$ and a total area of the nonaqueous binder present in the region surrounded by the electrode active material covered with the nonaqueous binder is $A_2$ in a cross section of the electrode mixture, $A_3 > A_2$ is satisfied.

19. A method for manufacturing an electrode for a secondary battery, comprising:

a step of forming, by the method according to any one of claims 11 to 14, an electrode material such that an entire surface of an electrode active material is covered in a shell shape with a nonaqueous binder;
a step of forming an electrode slurry by dispersing, in an aqueous solvent, an electrode mixture including the electrode material and a conductive auxiliary agent; and
a step of applying the electrode slurry onto a current collector and thereafter drying a coating film.

20. An electrode material for a secondary battery, comprising:

an electrode active material,
wherein part of a surface of the electrode active material is covered in a shell shape with a nonaqueous binder.

21. The electrode material according to claim 20, wherein
50% or more of the surface of the electrode active material is covered with the nonaqueous binder.

22. The electrode material according to claim 20, wherein
the nonaqueous binder includes a fluorine-based resin.

23. The electrode material according to claim 20, wherein
the electrode active material includes a positive electrode active material.

24. The electrode material according to claim 20, wherein
the electrode active material includes a lithium-containing composite oxide.

25. An electrode slurry comprising:

an electrode mixture,
wherein the electrode mixture includes the electrode material according to any one of claims 20 to 24 and a conductive auxiliary agent, and
the electrode mixture is dispersed in an aqueous solvent.

26. The electrode slurry according to claim 25, wherein the nonaqueous binder covering the surface of the electrode active material is not dissolved in the aqueous solvent.

27. The electrode slurry according to claim 25, wherein the conductive auxiliary agent includes a cellulose nanofiber.

28. A method for manufacturing an electrode material for a secondary battery, comprising:

a step of dissolving powder of a nonaqueous binder in a nonaqueous solvent and dispersing powder of an electrode active material in the nonaqueous solvent; and
a step of evaporating the nonaqueous solvent and covering part of a surface of the electrode active material in a shell shape with the nonaqueous binder.

29. An electrode for a secondary battery, comprising:

an electrode mixture formed on a current collector,
wherein the electrode mixture includes the electrode material according to any one of claims 20 to 24 and a conductive auxiliary agent,
the electrode active material in the electrode material is dispersed in a state of part of the surface thereof being covered in the shell shape with the nonaqueous binder, and
when a total volume of the nonaqueous binder covering the part of the surface of the electrode active material is $V_1$ and a total volume of the nonaqueous binder present in a region surrounded by the electrode active material covered with the nonaqueous binder is $V_2$, $V_1 > V_2$ is satisfied.

30. An electrode for a secondary battery, comprising:

an electrode mixture formed on a current collector,
wherein the electrode mixture includes the electrode material according to any one of claims 20 to 24 and a conductive auxiliary agent,
the electrode active material in the electrode material is dispersed in a state of part of the surface thereof being covered in the shell shape with the nonaqueous binder, and
when a total area of the nonaqueous binder covering the part of the surface of the electrode active material is $A_1$ and a total area of the nonaqueous binder present in a region surrounded by the electrode active material covered with the nonaqueous binder is $A_2$ in a cross section of the electrode mixture, $A_1 > A_2$ is satisfied.

31. An electrode for a secondary battery, comprising:

an electrode mixture formed on a current collector,
wherein the electrode mixture includes the electrode material according to any one of claims 20 to 24 and a conductive auxiliary agent,
the electrode active material in the electrode material is dispersed in a state of part of the surface thereof being covered in the shell shape with the nonaqueous binder, and
when a total volume of a region surrounded by the electrode active material covered with the nonaqueous binder is $V_3$ and a total volume of the nonaqueous binder present in the region surrounded by the electrode active material covered with the nonaqueous binder is $V_2$, $V_3 > V_2$ is satisfied.

32. An electrode for a secondary battery, comprising:

an electrode mixture formed on a current collector,
wherein the electrode mixture includes the electrode material according to any one of claims 20 to 24 and a conductive auxiliary agent,
the electrode active material in the electrode material is dispersed in a state of part of the surface thereof being covered in the shell shape with the nonaqueous binder, and
when a total area of a region surrounded by the electrode active material covered with the nonaqueous binder is $A_3$ and a total area of the nonaqueous binder present in the region surrounded by the electrode active material covered with the nonaqueous binder is $A_2$ in a cross section of the electrode mixture, $A_3 > A_2$ is satisfied.

33. An electrode for a secondary battery, comprising:

an electrode mixture formed on a current collector,
wherein the electrode mixture includes the electrode material according to any one of claims 20 to 24 and a conductive auxiliary agent,
the electrode active material in the electrode material is dispersed in a state of part of the surface thereof being covered in the shell shape with the nonaqueous binder, and
in a cross section of the electrode mixture, a coverage C defined by Expression (1) below is 30% or more,

$$C = (C_2 \div C_1) \times 100 \ldots (1)$$

(in Expression (1), $C_1$ represents a peripheral length of the electrode active material, and $C_2$ represents a total length of a portion of the nonaqueous binder contacting a periphery of the electrode active material).

34. A method for manufacturing an electrode for a secondary battery, comprising:

a step of forming, by the method according to claim 28, an electrode material such that part of a surface of an electrode active material is covered in a shell shape with a nonaqueous binder;
a step of forming an electrode slurry by dispersing, in an aqueous solvent, an electrode mixture including the electrode material and a conductive auxiliary agent; and
a step of applying the electrode slurry onto a current collector and thereafter drying a coating film.

## FIG. 1

## FIG. 2

## FIG. 3

## FIG. 4

FIG. 5

FIG. 6

FIG. 7

FIG. 8A

FIG. 8B

FIG. 9A

FIG. 9B

## FIG. 10A

## FIG. 10B

## FIG. 11A

## FIG. 11B

FIG. 12A

2 5.0kV 12.7mm x3.00k      10.0um

FIG. 12B

Ch 1

59 63
MAG: 3000x   HV: 5 kV   WD: 12.6 mm     10 µm

FIG. 13A

FIG. 13B

## FIG. 14

## FIG. 15

## INTERNATIONAL SEARCH REPORT

| International application No. |
| --- |
| **PCT/JP2024/011955** |

**A. CLASSIFICATION OF SUBJECT MATTER**

*H01M 4/58*(2010.01)i; *H01M 4/13*(2010.01)i; *H01M 4/139*(2010.01)i; *H01M 4/36*(2006.01)i; *H01M 4/485*(2010.01)i; *H01M 4/505*(2010.01)i; *H01M 4/525*(2010.01)i; *H01M 4/62*(2006.01)i

FI: H01M4/58; H01M4/13; H01M4/139; H01M4/36 A; H01M4/36 C; H01M4/485; H01M4/505; H01M4/525; H01M4/62 Z

According to International Patent Classification (IPC) or to both national classification and IPC

**B. FIELDS SEARCHED**

Minimum documentation searched (classification system followed by classification symbols)

H01M4/58; H01M4/13; H01M4/139; H01M4/36; H01M4/485; H01M4/505; H01M4/525; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-159385 A (HITACHI MAXELL LTD.) 10 July 2008 (2008-07-10) claims 1-3, 5, examples 1, 2 | 1-34 |
| A | JP 2011-181386 A (SANYO ELECTRIC CO., LTD.) 15 September 2011 (2011-09-15) claims 1, 3, paragraph [0034] | 1-34 |
| A | WO 2014/057993 A1 (ZEON CORPORATION) 17 April 2014 (2014-04-17) claims 1, 11, paragraph [0194] | 1-34 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **20 June 2024** | **02 July 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/011955**

| Patent document cited in search report | | | Publication date (day/month/year) | Patent family member(s) | | | Publication date (day/month/year) |
|---|---|---|---|---|---|---|---|
| JP | 2008-159385 | A | 10 July 2008 | (Family: none) | | | |
| JP | 2011-181386 | A | 15 September 2011 | (Family: none) | | | |
| WO | 2014/057993 | A1 | 17 April 2014 | EP | 2908364 | A1 | |
| | | | | CN | 104685673 | A | |
| | | | | KR | 10-2015-0070126 | A | |

Form PCT/ISA/210 (patent family annex) (July 2022)

**EP 4 679 532 A1**

**Patent documents cited in the description**

- JP 2017091789 A